# EUROPÄISCHE PATENTANMELDUNG

(11) **EP 2 200 136 A2**
(43) Veröffentlichungstag der Anmeldung: **23.06.2010**
(21) Anmeldenummer: 09015029.3
(22) Anmeldetag: 04.12.2009
(51) Int. Cl.: H02G 3/04

(54) **Energiesäule mit mechanischer und elektrischer Kontaktierung**

(30) Priorität: 20.12.2008 DE 202008016943 U
(71) Anmelder: Tehalit GmbH, 67716 Heltersberg (DE)
(72) Erfinder: Schmitt, Erwin, 67659 Kaiserslautern (DE)
(74) Vertreter: Patentanwälte Möll, Bitterich & Dr. Keller

(57) **Zusammenfassung**

Die Erfindung betrifft eine Energiesäule zur Bereitstellung von Elektroinstallationseinrichtungen, umfassend eine Säule (19) mit einem darin verlaufenden Kabelkanal für elektrische Leitungen oder Kabel und wenigstens einer Aufnahme für eine Elektroinstallationseinrichtung. Die Energiesäule besteht aus einem Oberteil (1), das mit der Säule (19) am Fußende verbunden ist, und eine Kontaktplatte (3) mit elektrischen Anschlüssen (4) zur elektrischen Kontaktierung besitzt, sowie aus einem Unterteil (11) mit einer weiteren Kontaktplatte (13) mit elektrischen Anschlüssen (14) zur elektrischen Kontaktierung mit den Anschlüssen (4) des Oberteils (1). Am Oberteil (1) ist eine Drehstange (2) befestigt, welche durch die Säule (19) nach oben verläuft und durch ein Verschlusselement (22) seitlich verdrehbar ist. An der Unterseite (7) des Oberteils (1) ist am Fußende der Drehstange (2) ein Schraubgewinde (5) ausgebildet, welches mit einem am Unterteil (11) ausgebildeten Gegengewinde kooperiert.

## Beschreibung

Die vorliegende Erfindung betrifft eine Energiesäule zur Bereitstellung von Elektroinstallationseinrichtungen gemäß dem Oberbegriff des Anspruchs 1.

Energiesäulen (bzw. Raumsäulen) werden in Räumen, insbesondere Büroräumen, aufgestellt und dienen der Bereitstellung von Elektroinstallationseinrichtungen wie Schalter, Steckdosen, Netzwerk- und Datenanschlüsse etc. an den jeweiligen Arbeitsplätzen. Energiesäulen werden hierzu entweder fest am Boden verankert oder sind im Raum beweglich angeordnet. Bei solchen Energiesäulen werden die Kabel und Leitungen vom Boden aus zugeführt. Daneben gibt es auch Energiesäulen, die raumhoch sind, damit die elektrischen Kabel und Leitungen von der Decke zum Funktionspunkt zugeführt werden können. Derartige Energiesäulen sind beispielsweise in der DE 20 2004 013 935 U1, EP 0 514 862 A, FR 2727577 A, FR 2290064 A, GB 1453952 A, EP 0 828 326 B, DE 296 15 033 U1 beschrieben.

Die elektrische und mechanische Montage einer Energiesäule ist bei den aus dem Stand der Technik bekannten Lösungen sehr aufwendig, da die elektrischen Kabel und Leitungen, welche vom Boden aus der Energiesäule zugeführt werden, an die Kontaktanschlusselemente der Energiesäule einzeln vom Monteur angeschlossen werden müssen. Oftmals besteht jedoch der Wunsch bzw. die Notwendigkeit, die Säule, beispielsweise im Zuge von Raumpflege- oder Umbaumaßnahmen, vollständig zu entfernen. Bei mehreren fest installierten Energiesäulen großer Büroräume ist dies mit einem erheblichen Demontage- und Zeit-Aufwand verbunden.

Die in der DE 20 2004 013 935 U1 vorgeschlagene Wannenlösung, bei der die Energiesäule in eine an die Säule angepasste Wanne umgelenkt wird, welche im Boden integriert ist, ist nicht in allen Räumen umsetzbar und verlangt darüber hinaus schon bei der Errichtung des Büroraumes umfangreiche bauliche Maßnahmen, welche nachträglich nur sehr schwer durchzuführen sind. Eine solche Lösung ist daher nicht befriedigend.

Vor diesem Hintergrund ist es somit Aufgabe der vorliegenden Erfindung, eine Energiesäule zur Bereitstellung von Elektroinstallationseinrichtungen anzugeben, bei der eine einfache sowie schnelle mechanische und elektrische Montage und Demontage der Säule möglich ist.

Gelöst wird diese Aufgabe durch eine Energiesäule mit den Merkmalen des Anspruchs 1. Weitere Ausführungsformen sind in den Unteransprüchen angegeben.

Die erfindungsgemäße Energiesäule besteht aus einer Säule, einem Oberteil und einem Unterteil, welche aufeinander gesteckt werden und sich dabei elektrisch und mechanisch kontaktieren. Das Oberteil befindet sich direkt am Fußende der Säule. In der Säule verläuft ein Kabelkanal mit den zuführenden Kabeln und Leitungen. Am Oberteil befindet sich an der Unterseite eine Kontaktplatte, an der sich die elektrischen Anschlüsse zur elektrischen Kontaktierung befinden. Vorzugsweise handelt es sich bei den Anschlüssen um schnell steckbare Stecker oder Buchsen.

Bevorzugt ist die Kontaktplatte beweglich. An dem Unterteil befinden sich die entsprechenden Gegenanschlüsse (also Buchsen bzw. Stecker). Das Unterteil ist vorzugsweise am Boden befestigbar.

Zur Orientierung aber auch zur Verdrehsicherung ist innen am Oberteil und am Unterteil ein Flachprofil ausgebildet, während der Sockel des Oberteils bzw. Unterteils selbst rundförmig ist. Zur mechanischen Befestigung des Oberteils mit dem Unterteil ist erfindungsgemäß am Oberteil eine zentrale Drehstange ausgebildet, welche durch die Säule nach oben verläuft und dort mit einem Verschlusselement, vorzugsweise einem Handdrehschalter oder Handriegel, drehbar befestigt ist. An der Unterseite des Oberteils befindet sich im Bereich der Kontaktplatte ein Schraubgewinde, das in eine am Unterteil ausgebildete Profilöffnung, vorzugsweise ein Gewinde, einschraubbar ist. Durch die Betätigung des Verschlusselementes an der Oberseite der Energiesäule wird das Oberteil fest mit dem Unterteil verbunden, so dass eine Selbstlockerung oder versehentliche Demontage vermieden wird.

Durch das Flachprofil ist die Orientierung des Oberteils zum Unterteil bei der Montage fest vorgegeben. Gleichzeitig stellt die Ebene eine Verdrehsicherung dar. Beim Aufsetzen der Energiesäule auf das Unterteil erfolgt sowohl eine elektrische Kontaktierung als auch eine mechanische Fixierung der Säule.

Die Erfindung wird in den nachfolgenden Zeichnungen näher erläutert. Es zeigen
- Fig. 1: das erfindungsgemäße Oberteil mit zentraler Drehstange,
- Fig. 2: ein zum Oberteil passendes Unterteil,
- Fig. 3: die Energiesäule mit montiertem Oberteil.

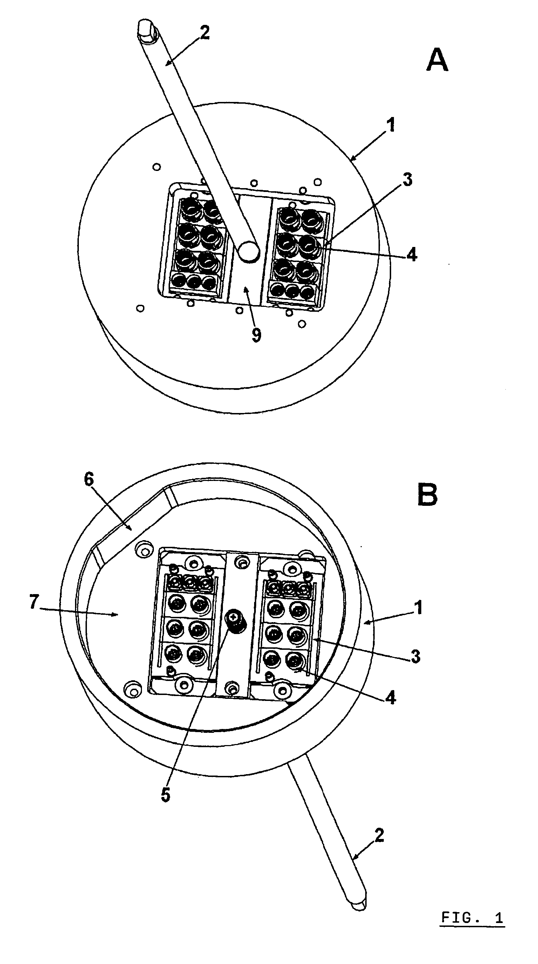

In Fig. 1 ist das Oberteil in verschiedenen Ansichten zu sehen. In Fig. 1A erkennt man in Draufsicht das Oberteil 1 mit einer zentralen elektrischen Kontaktplatte 3. Die Kontaktplatte 3 wird von einem Steg 9 getrennt. Durch den Steg 9 verläuft eine Drehstange 2 nach oben. Die Drehstange 2 dient zur Arretierung des Oberteils 1 mit dem Unterteil 11 beim Aufsetzen der Energiesäule auf das Unterteil 11. In der Kontaktplatte 3 befinden sich elektrische Anschlüsse 4, also Stecker oder Buchsen. In Fig. 1B erkennt man das Oberteil 1 von der Unterseite 7, also der Position, in der das Oberteil 1 auf das Unterteil 11 aufgesteckt wird. Als Verschlusselement für das Oberteil 1 mit dem Unterteil 11 ist ein Schraubgewinde 5 vorgesehen. Das Schraubgewinde 5 kooperiert mit einem entsprechenden Gegengewinde am Unterteil 11. Ferner erkennt man die elektrischen Anschlüsse 4 der Kontaktplatte 3. Zur Orientierung und zur Verdrehsicherung der Säule 19 ist ein Flachprofil 6 vorgesehen.

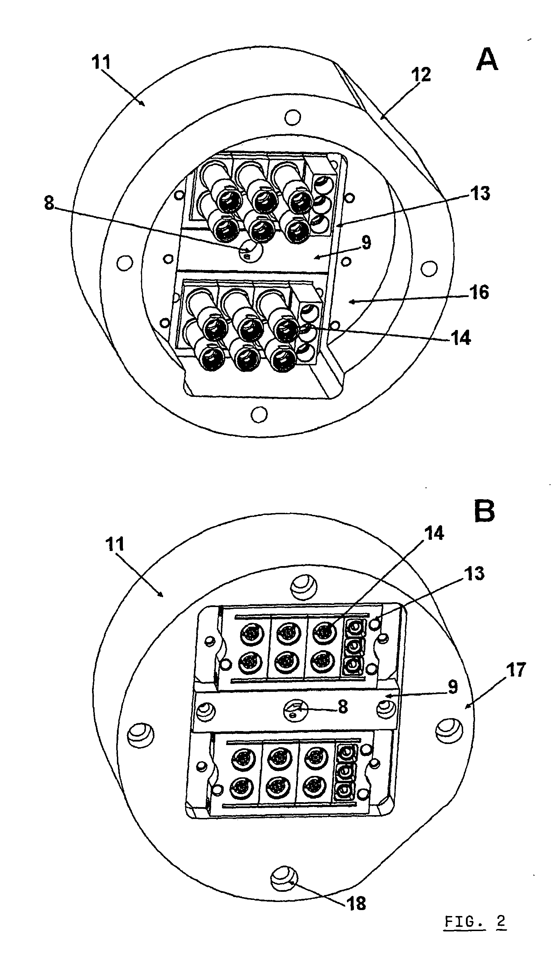

In Fig. 2 ist das Unterteil 11 zu erkennen. In Fig. 2A erkennt man das Unterteil 11 von dessen Unterseite 16. Das Flachprofil 6 des Oberteils 1 schließt beim Aufsetzen der Energiesäule mit der Kante 12 des Unterteils 11 ab. Am Unterteil 11 befindet sich eine weitere Kontaktplatte 13 mit elektrischen Anschlüssen 14 zur elektrischen Kontaktierung mit den Anschlüssen 4 des Oberteils 1.

In Fig. 2B erkennt man das Unterteil 11 von der Oberseite 17, d.h. der Seite, auf die das Oberteil 1 der Energiesäule draufgesetzt wird. Die Kontaktplatte 13 mit den Anschlüssen 14 ist durch den Steg 9 getrennt. Das Schraubgewinde 5 des Oberteils 1 greift in eine korrespondierende Profilöffnung 8, in dem ein Gegengewinde ausgebildet ist. Durch das seitliche Verdrehen der Drehstange 2 werden das Oberteil 1 und das Unterteil 11 miteinander mechanisch fest verbunden. Über Befestigungsöffnungen 18 kann das Unterteil 11 am Boden befestigt werden.

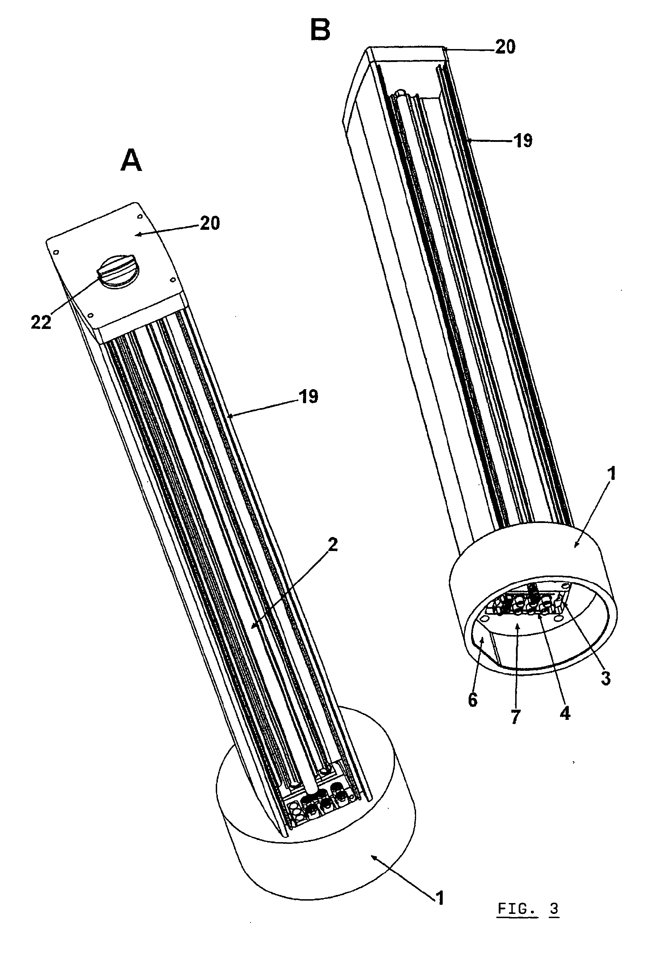

In Fig. 3 erkannt man die gesamte Energiesäule bestehend aus der Säule 19, einem Deckel 20 und dem Oberteil 1. Die Drehstange 2 verläuft durch die Säule 19 nach oben und ist mit einem am Deckel 20 angeordneten Verschlusselement 22, hier gezeigt als Drehschalter, drehbar verbunden.

## Patentansprüche

1. Energiesäule zur Bereitstellung von Elektroinstallationseinrichtungen, umfassend
- eine Säule (19) mit
- einem darin verlaufenden Kabelkanal für elektrische Leitungen oder Kabel,
- und wenigstens einer Aufnahme für eine Elektroinstallationseinrichtung,
- ein Oberteil (1), das mit der Säule (19) am Fußende verbunden ist, und eine Kontaktplatte (3) mit elektrischen Anschlüssen (4) zur elektrischen Kontaktierung besitzt,
- ein Unterteil (11) mit einer weiteren Kontaktplatte (13) mit elektrischen Anschlüssen (14) zur elektrischen Kontaktierung mit den Anschlüssen (4) des Oberteils (1), **gekennzeichnet durch** die Merkmale:
- am Oberteil (1) ist eine Drehstange (2) befestigt, welche **durch** die Säule (19) nach oben verläuft und **durch** ein Verschlusselement (22) seitlich verdrehbar ist,
- an der Unterseite (7) des Oberteils (1) ist am Fußende der Drehstange (2) ein Schraubgewinde (5) ausgebildet, welches mit einem am Unterteil (11) ausgebildeten Gegengewinde kooperiert.

2. Energiesäule nach Anspruch 1, **dadurch gekennzeichnet, dass** die Kontaktplatte (n) (3, 13) beweglich ist/sind.

3. Energiesäule nach Anspruch 2 oder 3, **dadurch gekennzeichnet, dass** es sich bei dem Verschlusselement (22) um einen Handdrehschalter handelt.

4. Energiesäule nach einem der vorhergehenden Ansprüche, **dadurch gekennzeichnet, dass** am Oberteil (1) innen ein Flachprofil (6) zur Orientierung und Verdrehsicherung der Energiesäule ausgebildet ist.

5. Energiesäule nach einem der vorhergehenden Ansprüche, **dadurch gekennzeichnet, dass** die Kontaktplatte (3) des Oberteils (1) durch einen Steg (9) getrennt wird, durch den das am Fußende der Drehstange (2) ausgebildete Schraubgewinde (5) in eine korrespondierende Profilöffnung (8) des Unterteils (11) einschraubbar ist.

6. Energiesäule nach einem der vorhergehenden Ansprüche, **dadurch gekennzeichnet, dass** sich am Unterteil (11) Befestigungsöffnungen (18) für eine Bodenmontage befinden.
